# EUROPÄISCHE PATENTSCHRIFT

(11) **EP 2 247 364 B1**
(45) Veröffentlichungstag und Bekanntmachung des Hinweises auf die Patenterteilung: **23.04.2014**
(21) Anmeldenummer: 09714966.0
(22) Anmeldetag: 26.02.2009
(51) Int. Cl.: B01D 46/52, B01D 46/00, B01D 46/24, F02M 35/024

(54) **FILTERELEMENT MIT GRIFF**
FILTER ELEMENT COMPRISING A HANDLE
ÉLÉMENT FILTRANT À POIGNÉE

(30) Priorität: 26.02.2008 DE 102008011186; 23.12.2008 DE 102008062954; 23.12.2008 DE 102008062953; 23.12.2008 DE 102008062956; 23.12.2008 DE 102008062955
(43) Veröffentlichungstag der Anmeldung: 10.11.2010
(73) Patentinhaber: Mann + Hummel GmbH, 71638 Ludwigsburg (DE)
(72) Erfinder: MÜNKEL, Karlheinz, 75038 Oberderdingen (DE); KOLCZYK, Markus, 74395 Mundelsheim (DE); BECKER, Stefan, 68305 Mannheim (DE); HEIM, Michael, 71691 Freiberg a. N. (DE)
(86) Internationale Anmeldenummer: PCT/EP2009/052322
(87) Internationale Veröffentlichungsnummer: WO 2009/106594

(56) Entgegenhaltungen:
- EP-A- 0 256 534
- EP-A- 1 214 962
- WO-A-02/092193
- WO-A-2007/046946
- WO-A-2008/067030
- US-A1- 2006 026 935
- US-A1- 2007 113 525
- US-A1- 2008 011 672
- US-B1- 6 319 298
- US-B1- 6 833 023

## Beschreibung

### Technisches Gebiet

Die vorliegende Erfindung bezieht sich auf ein Filterelement mit Griff und insbesondere auf ein Filterelement mit Griff, das eine bessere Handhabbarkeit und einen erhöhten Wirkungsgrad aufweist.

### Stand der Technik

Die für Brennkraftmaschinen benötigte Verbrennungsluft wird in der Regel vor dem Zuführen in den Verbrennungsraum gereinigt, um die Leistungsfähigkeit und Lebensdauer der Brennkraftmaschine zu erhöhen. Dabei wird für die Reinigung der Verbrennungsluft häufig eine Luftfilteranordnung verwendet. Dies ist insbesondere für Brennkraftmaschinen von Bedeutung, die in einer Umgebung arbeiten, die einer besonderen Verschmutzungsbelastung der Umgebungsluft ausgesetzt sind, so wie beispielsweise im Bereich des Baugewerbes bzw. der Landwirtschaft. Insbesondere im Bereich des Baugewerbes bzw. in der Landwirtschaft tritt eine mitunter sehr hohe Staubbelastung auf, die eine Reinigung der Verbrennungsluft notwendig macht. Aufgrund der Tatsache, dass das Spektrum der Staubpartikelgröße im Regelfall vorher nicht bekannt ist, muss eine Luftfilteranordnung so ausgestaltet sein, dass sämtliche Partikelgrößen, die den Betrieb der Brennkraftmaschine in irgendeiner Weise beeinflussen können, zuverlässig herausgefiltert werden können, um eine Zuführung hinreichend sauberer Verbrennungsluft zu der Brennkraftmaschine zu ermöglichen.
Aus der US 2007/0113525 A1 ist ein Filtersystem mit einem Filterelement bekannt, welches an einer Endscheibe einen Griffbereich aufweist.

Insbesondere im Bereich von Brennkraftmaschinen, die auf bzw. in Fahrzeugen zum Einsatz kommen, ist die Ausgestaltung eines effizienz- und platzoptimierten Luftfiltersystems unerlässlich, um die Abmessungen gering zu halten, und auf der anderen Seite eine dennoch hohe Effizienz der Luftfilteranordnung zu ermöglichen.

Darüber hinaus werden insbesondere bei Fahrzeugen Luftfilterelemente oftmals von den Fahrzeugführern selbst gewechselt, ohne dass dafür besonderes Fachpersonal herangezogen wird. Daher ist es ferner notwendig, eine Luftfilteranordnung derart auszugestalten, dass sie für einen zum Teil nur geringfügig geschulten Fahrzeugführer eine einfache Bedienbarkeit aufweist, die insbesondere eine Fehlbedienung bzw. einen Fehlzusammenbau im Wesentlichen unmöglich macht.

### Offenbarung der Erfindung

Vor dem Hintergrund des Standes der Technik liegt der vorliegenden Erfindung die Aufgabe zugrunde, ein Filterelement bereitzustellen, das einen verbesserten Wirkungsgrad aufweist und zugleich eine einfache Handhabung erlaubt.

Die Aufgabe der vorliegenden Erfindung wird gelöst durch ein Filterelement gemäß Anspruch 1, wobei weitergebildete Ausführungsformen in den abhängigen Ansprüchen verkörpert sind.

Erfindungsgemäß wird ein Filterelement bereitgestellt mit einer Filterfaltenbalganordnung mit einem ersten Filterfaltenbalg mit einer im Wesentlichen axialen Ausdehnungsrichtung und einer im Wesentlichen in einer dazu orthogonal verlaufenden Ebene radialer Ausdehnungsrichtung, einem Griff und einer Leitflächenanordnung, wobei die Filterfaltenbalganordnung wenigstens eine Begrenzungsfläche eines Anströmkanals bildet, über den das Filterelement angeströmt wird, wobei die Leitflächenanordnung ausgelegt ist, um eine Fluidströmung gerichtet an die Filterfaltenbalganordnung heranzuführen, und wobei der Griff in die Leitflächenanordnung integriert ist.

Auf diese Weise kann ein Filterelement mit einer Leitflächenanordnung und einem Griff bereitgestellt werden und durch die integrative Anordnung des Griffes und der Leitflächenanordnung eine platzoptimierte Geometrie für ein Filterelement bereitgestellt werden. Ein derartiges Filterelement weist aufgrund der Leitflächenanordnung eine erhöhte Effizienz bzw. einen erhöhten Wirkungsgrad auf und gewährleistet gleichzeitig eine gute Handhabbarkeit durch die Bereitstellung einer Griffanordnung für ein Bedienpersonal. Die Integration des Griffes in die Leitflächenanordnung erlaubt zum einen eine Ausgestaltung der Griffanordnung derart, dass das Filterelement problemlos und einfach aus einem Luftfiltergehäuse entnommen werden kann, wobei durch die entsprechende Ausgestaltung der Leitflächenanordnung mit einem Griff bereits die notwendige Bedienbarkeit und der Kontakt des Bedienpersonals mit der Leitflächenanordnung berücksichtigt wird, so dass diese entsprechend stabil und robust ausgestaltet wird. Zudem erlaubt die integrative Ausgestaltung des Griffes und der Leitflächenanordnung eine platzsparende Anordnung, da nicht zusätzlicher Raum für entweder einen zusätzlichen Griff oder eine zusätzliche Leitflächenanordnung bereitgestellt werden muss.

Gemäß der Erfindung weist die Leitflächenanordnung in einer Richtung quer zur axialen Ausdehnungsrichtung einen Durchgriff auf.

Ein derartiger Durchgriff ermöglicht das Eingreifen in die Leitflächenanordnung, um das Filterelement an der Leitflächenanordnung und den durch den Durchgriff gebildeten Griff aus seiner Betriebsposition entnehmen zu können oder in die Betriebsposition verbringen zu können. Dies erhöht die Handhabbarkeit des Filterelementes und verhindert, dass eventuell ungeschultes Bedienpersonal das Filterelement an Stellen angreift, die eventuell empfindlich sind, insbesondere die äußeren Mantelflächen eines Faltenbalges. Dabei agiert das Bedienpersonal häufig mit Handschuhen und nimmt eine mögliche Beschädigung des Faltenbalges nicht wahr. Daher ist eine vordefinierte Griffposition hilfreich, um das Filterelement vor unbeabsichtigten Beschädigungen schützen zu können. Die Integration eines Durchgriffes in eine Leitflächenanordnung erübrigt dabei das Vorsehen eines separaten Griffes, der die Bauform eines Filterelementes zusätzlich vergrößern würde.

Gemäß einer Ausführungsform der Erfindung weist die Filterfaltenbalganordnung einen ersten Filterfaltenbalg mit im Wesentlichen in einer axialen Ausdehnungsrichtung des Filterelementes verlaufenden Filterfalten und einen zweiten Filterfaltenbalg mit im Wesentlichen in einer axialen Ausdehnungsrichtung des Filterelementes verlaufenden Filterfalten auf, wobei der zweite Filterbalg radial innen zu dem ersten Filterbalg angeordnet ist.

Auf diese Weise wird zwischen dem ersten Filterfaltenbalg und dem zweiten Filterfaltenbalg ein An- bzw. Abströmkanal bereitgestellt, der ein geplantes Heranführen bzw. Abführen des zu filternden bzw. gefilterten Fluids erlaubt. Die Leitflächenanordnung kann dabei so angeordnet sein, dass sie die Zuleitung bzw. Ableitung in bzw. aus den so gebildeten An- bzw. Abströmkanal erlaubt. Auf diese Weise ist eine kompakte Bauweise möglich unter gleichzeitiger Aufrechterhaltung einer hohen Effizienz des Luftfilters, die sich insbesondere auch durch einen geringen Strömungswiderstand auszeichnet.

Gemäß einer Ausführungsform der Erfindung sind die Filterfalten des zweiten Filterbalges gegenüber den Filterfalten des ersten Filterbalges in einer axialen Ausdehnungsrichtung wenigstens abschnittsweise geneigt.

Auf diese Weise ergibt sich ein verjüngender Anström- bzw. ein sich verbreiternder Abströmkanal, so dass durch eine in axiale Richtung zunehmende radiale Abströmung bzw. Anströmung abnehmender bzw. zunehmender Fluidstrom mit dem abnehmenden bzw. zunehmenden Querschnitt eines Anström- bzw. Abströmkanals korrespondiert.

Gemäß einer Ausführungsform der Erfindung weist ein innerer Faltenbalg in einer Ebene der radialen Ausdehnungsrichtung einen ersten gebogenen Abschnitt und einen zweiten gebogenen Abschnitt auf mit einem jeweils dazwischen liegenden ersten im Wesentlichen geraden Abschnitt und einem zweiten im Wesentlichen geraden Abschnitt.

Auf diese Weise ergibt sich ein Filterfaltenbalg mit einer im Wesentlichen ovalen Querschnittsgeometrie, die eine besonders hohe Effizienz bezüglich der Bauform erlaubt. Insbesondere kann ein Filterelement mit einem derartigen Filterfaltenbalg besonders kompakt ausgestaltet werden.

Gemäß einer Ausführungsform der Erfindung sind an einem ersten axialen Ende des zweiten Filterbalges der erste gerade Abschnitt mit dem zweiten geraden Abschnitt derart mit einem ersten Dichtungselement miteinander verbunden, dass eine Reingasseite und eine Rohgasseite des zweiten Filterbalges fehlluftdicht voneinander getrennt sind.

Auf diese Weise wird auf der zwischen dem ersten und dem zweiten Filterbalg gebildeten An- bzw. Abströmkanal gegenüber liegenden Seite ein zentraler Ab- bzw. Anströmkanal ausgebildet, wobei zwischen diesem zentralen Ab- bzw. Anströmkanal und dem zwischen dem ersten und dem zweiten Filterbalg gebildeten An- bzw. Abströmkanal ein Fluidaustausch mit einer Filterung erfolgt. Darüber hinaus kann auch ein weiterer Ab- bzw. Anströmkanal ausgebildet werden zwischen der äußeren Mantelfläche des ersten Filterbalges und einem Luftfiltergehäuse, in das das Filterelement eingesetzt werden kann. Dabei erfolgt auch zwischen diesem zwischen dem Luftfiltergehäuse und dem ersten Filterbalg liegenden Ab- bzw. Anströmkanal und dem zwischen dem ersten und dem zweiten Filterfaltenbalg liegenden An- bzw. Abströmkanal ein Fluidaustausch mit Filterung.

Gemäß einer Ausführungsform der Erfindung ist an dem ersten Dichtungselement eine sich in die axiale Ausdehnungsrichtung erstreckende Leitflächenanordnung angeordnet, die ausgelegt ist, um eine auf das erste Dichtungselement anströmende Fluidströmung seitlich abzulenken.

Die Dichtungselemente sind notwendig, um eine fehlluftdichte Trennung zwischen einer Rohgasseite und einer Reingasseite bereitzustellen, wobei derartige Dichtungselemente häufig im Strömungsweg der Fluidströmung liegen. Eine Leitflächenanordnung, die die Fluidströmung seitlich an dem Dichtungselement vorbeiführt, erhöht somit die Effizienz der Filterleistung durch Verringerung des Strömungswiderstandes. Insbesondere können sanfte Übergänge geschaffen werden, bei denen eine Fluidströmung nicht direkt auf die oftmals quer zu der Strömungsrichtung verlaufenden Oberflächen der Dichtungselemente auftreffen.

Gemäß einer Ausführungsform der Erfindung ist eine den Durchgriff in stromaufwärtige Richtung begrenzende Kante derart ausgestaltet, dass eine Fluidströmung im Wesentlichen über eine den Durchgriff in stromabwärtige Richtung begrenzende Kante hinwegleitbar ist.

Dies kann beispielsweise dadurch erreicht werden, dass die begrenzende Kante in stromaufwärtige Richtung aus der Anströmrichtung betrachtet über die den Druchgriff in stromabwärtige Richtung begrenzende Kante hinausragt, so dass eine Strömung über die in stromabwärtige Richtung begrenzende Kante hinweggeleitet wird. Dabei muss die in stromaufwärtige Richtung begrenzende Kante jedoch nicht zwingend die in stromabwärtige Richtung begrenzende Kante überragen. Vielmehr kann die Leitflächenanordnung oberhalb der stromaufwärtig angeordneten Kante so ausgestaltet sein, dass sie den Fluidstrom über die in stromabwärtige Richtung begrenzende Kante hinwegleitet. Somit ist die Ausgestaltung und die Positionierung der Kante un ter Umständen davon abhängig, mit welcher geplanten Geschwindigkeit das Fluid die Leitflächenanordnung anströmt. In jedem Fall soll auf diese Weise vermieden werden, dass der Fluidstrom auf die in stromabwärtige Richtung begrenzende Kante derart auftrifft, dass ein Fluidstrom abgebremst oder gar in den Durchgriff umgeleitet wird.

Gemäß einer Ausführungsform der Erfindung erstreckt sich das erste Dichtungselement in einer Ebene der radialen Ausdehnungsrichtung nur teilweise über eine Tiefe der zweiten Filterfalten des zweiten Filterbalges.

Obgleich das erste Dichtungselement in dieser Ausführungsform sich nur teilweise über die Tiefe der zweiten Filterfalten erstreckt, sind die zweiten Filterfalten auf der nach innen gewandten Seite im Bereich der Stirnseite derart miteinander verheftet bzw. verklebt, dass eine fehlluftdichte Trennung zwischen der Rohgasseite und der Reingasseite gewährleistet ist. Die gegenüber liegende Seite der Filterfalten bleibt jedoch frei, insbesondere im Bereich der Stirnfläche, so dass die Stirnfläche bzw. der Bereich zwischen den Filterfalten ebenfalls als Anströmfläche zur Verfügung steht und der Anströmkanal nicht durch die innere Mantelfläche des ersten Filterfaltenbalges und die äußere Mantelfläche des zweiten Filterfaltenbalges begrenzt ist, sondern zusätzlich die Flächen zwischen den Filterfalten der der Verklebung gegenüber liegenden Seiten zur Verfügung steht. Auf diese Weise kann die Leitflächenanordnung wesentlich schmaler ausgeführt werden, da diese lediglich über das sich nur teilweise über die Tiefe der zweiten Filterfalten erstreckende Dichtungselement hinwegleiten muss und nicht über die gesamte Tiefe der zweiten Filterfalten des zweiten Filterfaltenbalges.

Gemäß einer Ausführungsform der Erfindung sind der erste Filterfaltenbalg und der zweite Filterfaltenbalg an jeweils einem zweiten axialen Ende derart mit einem zweiten Dichtungselement miteinander verbunden, dass jeweils die Reingasseiten und die Rohgasseiten des ersten Filterfaltenbalges und des zweiten Filterfaltenbalges fehlluftdicht voneinander getrennt sind.

An dieser Stelle sei angemerkt, dass sich das zweite Dichtungselement dabei entweder über die vollständige Tiefe der Filterfalten sowohl des ersten Filterfaltenbalges als auch des zweiten Filterfaltenbalges erstrecken kann, jedoch auch so ausgestaltet sein kann, dass sich das Dichtungselement nur teilweise über die Tiefe des ersten Filterfaltenbalges bzw. die Tiefe des zweiten Filterfaltenbalges erstreckt. Eine entsprechende Verklebung der Zwischenräume der Filterfalten im Bereich der Stirnseite verhindert dabei einen ungefilterten Durchtritt des Fluids von der Rohgasseite auf die Reingasseite. Insbesondere für die Ausführungsformen, in denen das zweite Dichtungselement sich über die gesamte Tiefe des ersten Filterfaltenbalges erstreckt, kann das zweite Dichtungselement als Stoßkantenschutz dienen, so dass das Filterelement vor einer unbeabsichtigten Beschädigung insbesondere der exponierten Kanten der Filterfalten bewahrt werden kann.

Gemäß einer Ausführungsform der Erfindung ist der erste Filterfaltenbalg an einem ersten axialen Ende mit einer bezüglich einer Außenkante des ersten Filterfaltenbalges formwahrenden Schale versehen.

Eine derartige formwahrende Schale kann beispielsweise zur Aufnahme und Abdichtung der äußeren Kante des ersten Filterfaltenbalges dienen und zugleich auch eine Aufnahme für eine Dichtung bereitstellen, um das Filterelement entweder gegenüber dem Luftfiltergehäuse oder/und gegenüber einem Vorfilterelement oder einem nachgeschalteten Sicherheitsfilterelement abzudichten. Darüber hinaus kann an der formwahrenden Schale eine Gleitflächenanordnung vorgesehen sein, die eine anströmende Fluidströmung in die Anströmkanäle einleitet bzw. turbulenzarm aus dem Abströmungskanal herausführt.

Gemäß einer Ausführungsform der Erfindung ist die Leitflächenanordnung an der formwahrenden Schale angeordnet und erstreckt sich in die axiale Ausdehnungsrichtung, wobei der Griff an der formwahrenden Schale angeordnet ist.

Durch die Anordnung eines Griffs an der formwahrenden Schale kann eine Verformung des Filterelementes bei einem Kraftbeaufschlagen des Griffes im Wesentlichen verhindert werden, da die formwahrende Schale eine gleichmäßige Kraftverteilung gewährleistet und verhindert, dass Schärkräfte eventuell die Filterfalten im Inneren auseinanderreißen und somit Beschädigungen hervorrufen, die einen ungefilterten Durchtritt des Fluids von der Rohgasseite zu der Reingasseite zur Folge hätte.

Gemäß einer Ausführungsform der Erfindung weist die Leitflächenanordnung einen Durchgriff mit einer Verbindung zu einem aus der Faltenfilteranordnung gebildeten Anströmungskanal auf.

Dabei kann die anströmende Luft den durch den Durchgriff gebildeten Handgriff umströmen, um somit hinter dem Durchgriff wieder zurückzuströmen, so dass eine dahinterliegende Öffnung eines Anströmungskanals durch das angeströmte Fluid erreicht werden kann.

Gemäß einer Ausführungsform der Erfindung ist die Leitflächenanordnung in radialer Richtung neben der Filterfaltenbalganordnung angeordnet und erstreckt sich im Wesentlichen in Richtung der axialen Ausdehnungsrichtung.

Eine derartige Anordnung eines Griffes erlaubt die Entnahme des Filterelementes quer zur Durchströmungsrichtung, insbesondere wenn das Luftfiltergehäuse eine seitliche Öffnung aufweist zur Entnahme des Filterelementes. Insbesondere kann ein Griff so angeordnet sein, dass er nicht unmittelbar vor den Anströmkanälen bzw. den Abströmkanälen des Filterelementes liegt. Die in radialer Richtung neben der Filterfaltenbalganordnung angeordnete Leitflächenanordnung kann dabei insbesondere eine tangentiale Anströmung der äußeren Mantelfläche der ersten Faltenfilterbalganordnung unterstützen. Durch eine entsprechende Ausgestaltung des Luftfiltergehäuses und der Leitflächenanordnung kann entlang des Umfanges des Filterelementes somit eine sich verjüngende, um den Umfang herumgreifende Anströmkanalgeometrie bereitgestellt werden, die eine gleichmäßige Anströmung und Durchströmung des ersten Filterfaltenbalges in radial nach innen gerichteter Richtung ermöglicht.

Gemäß einer Ausführungsform der Erfindung ist die Leitflächenanordnung von der Mantelfläche der Filterfaltenbalganordnung beabstandet. Insbesondere kann die Leitflächenanordnung an der äußeren Mantelfläche des ersten Filterfaltenbalges derart angeordnet sein, dass sie bei einer tangentialen Anströmung als eine Leitflächenanordnung dient, die zum einen eine Verteilung der tangential angeströmten Luft über einen gewissen Umfangsbereich erlaubt und zugleich mit der unter der Leitflächenanordnung liegenden Mantelfläche des ersten Filterfaltenbalges eine Düsenanordnung bildet, die eine besondere Unterstützung der tangentialen Strömung erlaubt.

Gemäß einer Ausführungsform der Erfindung weist die Leitflächenanordnung eine Ausnehmung zum Hintergreifen auf.

Eine derartige Ausnehmung erlaubt eine Entnahme des Filterelementes aus einem Luftfiltergehäuse quer zur axialen Durchströmungsrichtung. Eine entsprechende Ausnehmung ermöglicht den Eingriff und somit das sichere Halten des Filterelementes sowie eine mögliche Kraftbeaufschlagung, um das Filterelement aus einer eventuell vorhandenen Dichtungsanordnung herauszuziehen.

Gemäß einer Ausführungsform der Erfindung weist der Griff eine Gitterstruktur auf, wobei die Gitterstruktur kanalförmige Ausnehmungen aufweist, die sich im Wesentlichen in eine Fluidströmungsrichtung erstrecken.

Auf diese Weise kann der Griff mittels Gitterstruktur stabil ausgestaltet werden, stellt jedoch keinen oder nur einen wesentlich geringeren Strömungswiderstand dar als eine Anordnung ohne Griff. Die Fluidströmung kann im Wesentlichen ohne große Umwege die kanalförmigen Ausnehmungen des Griffes durchströmen und somit zu den entsprechend vorgesehenen Anströmöffnungen gelangen.

Gemäß einer Ausführungsform der Erfindung weisen die kanalförmigen Ausnehmungen Einlasskanten auf, die in Bezug auf einen Kanaleinlass eine strömungsoptimierte Geometrie aufweisen.

Dies kann beispielsweise dadurch erfolgen, dass die Kanaleinlasskanten scharfkantig ausgeführt sind. Derartige Kanten können beispielsweise derart verstärkt werden, dass insbesondere ein Betätigen mit Handschuhen keine Beschädigung an den Kanaleinlasskanten hervorruft. Alternativ können diese Kanaleinlasskanten auch aus einem hochflexiblen Material ausgestaltet sein, so dass sich ein Bediener keine Verletzungen zuzieht, jedoch beim Einsetzen bzw. beim Entnehmen des Filterelementes keine Beschädigung der scharfkantigen Einlasskanten auftritt.

Es sei verstanden, dass auch eine Kombination der zuvor beschriebenen Merkmale möglich ist, wodurch sich zum Teil eine synergetische Wechselwirkung einstellen kann, die über die Summe der Einzelwirkungen der genannten Merkmale hinausgeht.

Im Folgenden werden nun beispielhafte Ausführungsformen der Erfindung anhand der beigefügten Zeichnungen beschrieben und erläutert.

### Kurze Beschreibung der Zeichnungen

Figur 1 zeigt eine beispielhafte Ausführungsform eines Filterelementes in einer Schnittansicht.
Figur 2 zeigt eine beispielhafte Ausführungsform eines Filterelementes mit einer Leitflächenanordnung mit Griff.
Figur 3 zeigt eine weitere beispielhafte Ausführungsform eines Filterelementes mit einer Leitflächenanordnung mit Griff bzw. Durchgriff.
Figur 4 zeigt eine beispielhafte Ausführungsform eines Filterelementes mit einer seitlich am Filterelement angeordneten Leitflächenanordnung mit Durchgriff.
Figur 5 zeigt eine beispielhafte Ausführungsform eines Luftfiltergehäuses mit eingebautem Filterelement in einem quer zur axialen Erstreckungsrichtung verlaufenden Schnitt mit einer seitlich am Filterelement angeordneten Leitflächenanordnung mit Durchgriff.
Figur 6 zeigt eine beispielhafte Ausführungsform einer Leitflächenanordnung auf einem Dichtungselement gemäß einer Ausführungsform der Erfindung.
Figur 7 zeigt eine beispielhafte Ausführungsform einer Leitflächenanordnung an einer Dichtungsanordnung.
Figur 8 zeigt eine weitere beispielhafte Ausführungsform einer Leitflächenanordnung an einer Dichtungskonfiguration mit einem Durchgriff.
Figur 9 zeigt eine beispielhafte Ausführungsform einer Leitflächenanordnung mit Griff an einer Dichtungskonfiguration.
Figur 10 zeigt eine Schnittansicht einer Leitflächenanordnung mit einem Strömungsverlauf gemäß einer beispielhaften Ausführungsform der Erfindung.
Figur 11 zeigt eine beispielhafte Ausführungsform eines Griffes bzw. einer Leitflächenanordnung mit in Strömungsrichtung verlaufenden Kanälen im Griff.

Die im Folgenden beschriebenen Ausführungsformen sind keinesfalls beschränkend aufzufassen und zeigen zweckmäßige, jedoch nicht ausschließliche Ausführungsformen der vorliegenden Erfindung.

### Beschreibung beispielhafter Ausführungsformen der Erfindung

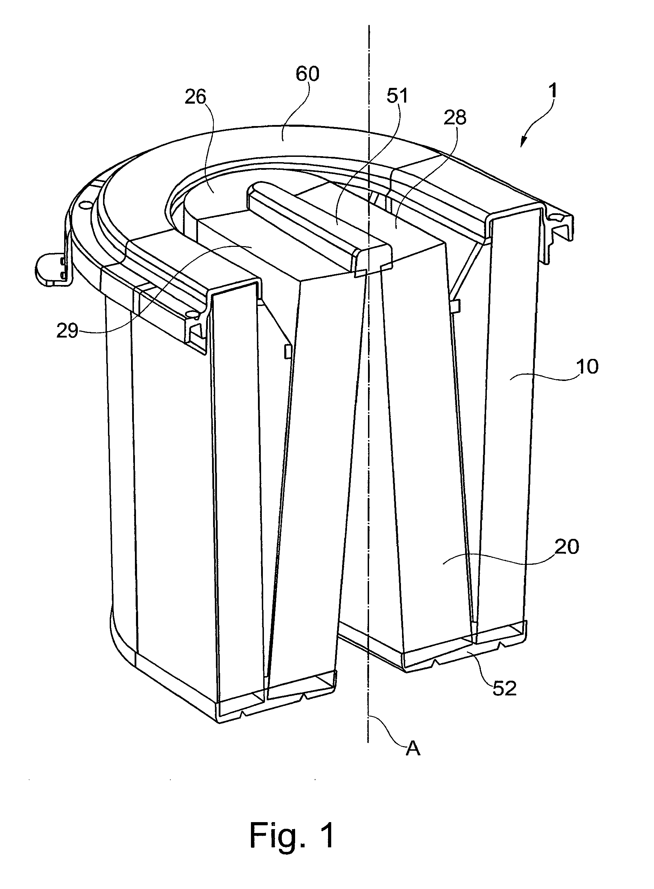

Figur 1 zeigt ein Filterelement, das als Grundlage für ein Filterelement einer beispielhaften Ausführungsform der Erfindung dient. Das in Figur 1 gezeigte Filterelement weist einen äußeren Faltenbalg 10 und einen radial dazu innen liegenden Faltenbalg 20 auf. Der innen liegende Faltenbalg 20 kann dabei zu dem äußeren Faltenbalg 10 geneigt sein, so dass sich zwischen dem inneren Faltenbalg 20 und dem äußeren Faltenbalg 10 ein Ab- bzw. Anströmkanal bildet, der sich hier nach oben verbreitert. Durch die geneigte Anstellung des zweiten Faltenbalgelementes 20 ergibt sich ein Ab- bzw. Anströmkanal zwischen den beiden inneren Mantelflächen des zweiten Faltenbalgelementes, der zentral ab- bzw. angeströmt wird. Der erste Faltenbalg 10 und der zweite Faltenbalg 20 können beispielsweise über ein entsprechendes Dichtungselement 52 fehlluftdicht miteinander verbunden werden, so dass sich zum einen eine fehlluftdichte Trennung zwischen der Rohgasseite und der Reingasseite einstellt und zum anderen bei einer Erstreckung der Dichtungsanordnung 52 bis zum äußeren Rand des Filterelementes ein Stoßschutz ergibt. Ferner können die sich gegenüber liegenden im Wesentlichen geraden Seiten 28 und 29 des zweiten Faltenbalgelementes 20 über ein erstes Dichtungselement 51 miteinander verbunden sein, das in der hier gezeigten Ausführungsform sich nur teilweise über die Tiefe der Filterfalten erstreckt. Dabei können die Filterfalten auf der nach innen gewandten Seite miteinander derart verklebt sein, dass eine fehlluftdichte Trennung zwischen der Rohgasseite und der Reingasseite erfolgt, jedoch die gegenüberliegenden Seiten der Filterfalten an der Stirnseite offenbleiben, so dass sich die Anströmfläche nicht nur auf den Bereich zwischen der inneren Mantelfläche des ersten Filterelementes 10 und der äußeren Mantelfläche des zweiten Filterelementes 20 beschränkt, sondern auch sich bis in die Zwischenräume der Falten des zweiten Filterelementes 20 hinein erstreckt. Auf diese Weise kann die Anströmfläche wesentlich vergrößert werden. Das Filterelement weist ferner eine formwahrende Schale 60 auf, die sich hier über die gesamte Tiefe des ersten Faltenbalges 10 erstreckt. Diese formwahrende Schale kann sich jedoch von außen auch nur teilweise über die Tiefe des ersten Faltenbalges 10 erstrecken, so dass sich auch an dieser Stelle die Anströmfläche des An- bzw. Abströmkanals verbreitert. An der formwahrenden Schale können beispielsweise Griffelemente, Dichtungskonfigurationen oder Leitflächenanordnungen vorgesehen sein, wie im Folgenden beschrieben wird. Das erste Faltenbalgelement ebenso wie das zweite Faltenbalgelement können eine ovale Umfangskontur aufweisen, so dass sich neben den im Wesentlichen gerade verlaufenden Abschnitten 28, 29 auch ein die geraden Abschnitte verbindender gekrümmter Abschnitt 26 ergibt. Analog ist ein derartiger gekrümmter Abschnitt auch auf der hier nicht gezeigten und weggeschnittenen Seite des Filterelementes vorhanden.

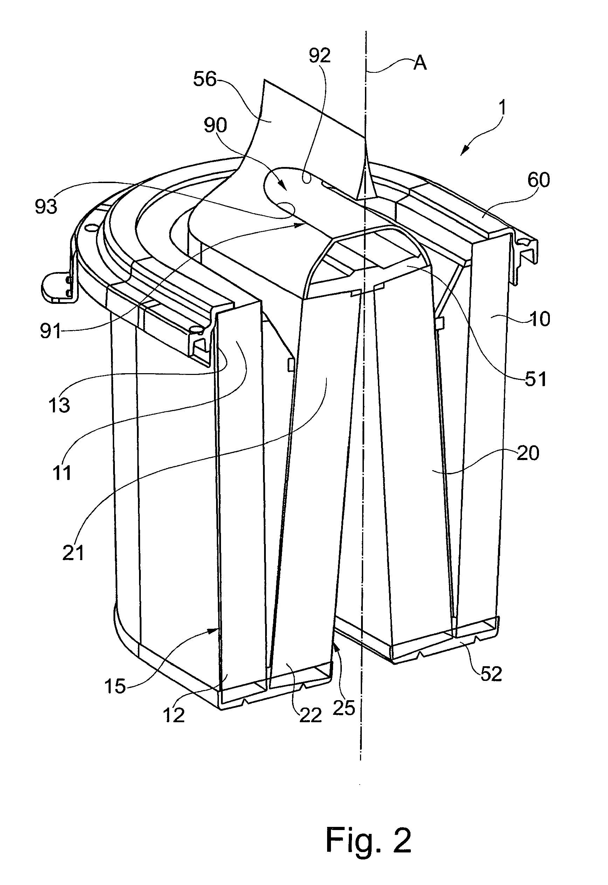

Figur 2 zeigt eine beispielhafte Ausführungsform der Erfindung, bei der das Filterelement 1 mit einer Leitflächenanordnung 56 versehen ist, die in der hier gezeigten Ausführungsform mit einem ersten Dichtungselement 51 verbunden ist. Die Leitflächenanordnung 56 weist hier einen Durchgriff 90 auf, der eine in Strömungsrichtung liegende vordere Kante 92 aufweist und eine in Strömungsrichtung dahinter liegende hintere Kante 93 aufweist. Der Durchgriff 91 bildet mit den beiden Kanten 92 und 93 zusammen einen Griff 90, der zum Eingreifen dient, um beispielsweise das Filterelement 1 aus einer Dichtungsanordnung herauszuziehen. Die Leitflächenanordnung ist so ausgestaltet, dass ein in axialer Erstreckungsrichtung A anströmendes Fluid an der Dichtungsanordnung 51 vorbeigeleitet wird und im Wesentlichen turbulenzfrei in den Anströmungskanal zwischen dem ersten Faltenbalg 10 und dem zweiten Faltenbalg 20 gelangen kann. Die Kanten 92 und 93 sind dabei so ausgestaltet, dass sich eine im Wesentlichen turbulenzfreie bzw. turbulenzarme Strömung durch die Leitflächenanordnung 56 an dem ersten Dichtungselement 51 vorbei ergibt. An der Außenkante 13 an einem ersten axialen Ende 11 des ersten Filterbalges ist beispielsweise eine formwahrende Schale 60 vorgesehen, die in der hier gezeigten Ausführungsform sich nur teilweise radial nach innen über die Tiefe des ersten Faltenbalges 10 erstreckt. Auf diese Weise steht eine weitere Anströmfläche zwischen den Filterfalten zur Verfügung, so dass sich gegenüber einer gänzlich über die Faltentiefe erstreckenden formwahrenden Schale eine vergrößerte Anströmfläche ergibt, die zu einer erhöhten Effizienz des Filterelementes führt. Gegenüberliegend von dem ersten axialen Ende 21 des zweiten Filterbalges 20 ist dieser an einem zweiten axialen Ende 22 zusammen mit dem zweiten axialen Ende 12 des ersten Filterbalges mit einer zweiten Dichtungsanordnung fehlluftdicht verbunden. Die zweite Dichtungsanordnung erstreckt sich in der hier gezeigten Ausführungsform über die gesamte Tiefe der ersten Filterfalten 15 des ersten Faltenbalges sowie über die gesamte Faltentiefe der zweiten Filterfalten 25 des zweiten Faltenbalges 20. Es sei jedoch verstanden, dass sich die Dichtungsanordnung 52 nur über den Grenzbereich zwischen dem ersten Faltenbalg 10 und dem zweiten Faltenbalg 20 erstrecken kann, um auf diese Weise auch eine vergrößerte Abströmgeometrie bereitstellen zu können. In diesem Fall können die Stirnseiten der zueinander liegenden Faltenöffnungen der ersten Filterfalten 15 und der zweiten Filterfalten 25, nämlich die, die dem Zwischenraum des ersten Faltenbalges 10 und des zweiten Faltenbalges 20 zugewandt sind, miteinander verleimt oder verheftet sein, so dass eine fehlluftdichte Trennung eines Rohgasraumes von einem Reingasraum erfolgt.

Mit dem in die Leitflächenanordnung 56 integrierten Griff 90 kann das Filterelement so in axiale Richtung aus einer Dichtungsanordnung herausgezogen werden oder in die Dichtungsanordnung hineingedrückt werden. Die Leitflächenanordnung kann beispielsweise aus einem harten Material gefertigt sein und somit eine harte Schale darstellen, die auf die erste Dichtungskonfiguration aufgesetzt wird. Die Leitflächenanordnung 56 kann jedoch ebenso auch aus einem elastischen, aber zähen Material bestehen, das eine entsprechende Kraftausübung erlaubt, ohne dass die Geometrie der Leitflächenanordnung 56 in einem entspannten bzw. elastisch rückgestellten Bereich beeinträchtigt wird. Beispielsweise kann die Leitflächenanordnung mit der integrierten Griffmulde 91 zusammen mit der ersten Dichtungsanordnung 51 geschäumt werden, so dass die Dichtung und die Leitflächenanordnung mit integriertem Griff 90 in einem Arbeitsschritt hergestellt werden können.

Zur leichteren Handhabung des z.B. als Zweibalgfilter ausgebildeten Hauptfilterelementes kann dieses eine zum Beispiel an der Unterseite eines umlaufenden Dichtringes an der formwahrenden Schale 60 ausgebildete Griffmulde umfassen. Diese kann so ausgebildet sein, dass eine Einhand-Montage bzw. -Demontage des Hauptfilterelementes, d.h. des Filterelementes erfolgen kann. Dies bietet zum Beispiel Vorteile beim Austausch eines Filterelementes am Luftfilter einer landwirtschaftlichen Maschine, so zum Beispiel eines Mähdreschers oder eines Ackerschleppers, oder einer Baumaschine, bei der in der Regel der Bediener sich mit der anderen Hand festhält.

Neben den Griffmulden im oberen Bereich des z.B. als Zweifachfilterbalg ausgebildeten Hauptfilterelementes können an der zweiten Dichtungsanordnung 52 in einer Winkelteilung von z.B. 90° oder 120° Ausrichte- oder Zentriernocken ausgebildet werden. Dadurch kann sichergestellt werden, dass das Filterelement, insbesondere bei Einhand-Handhabung, an dem Griff 90 stets in korrekter Position, d.h. parallel zur Längsachse A des Filtergehäuses 100 eingebaut und ausgerichtet ist, so dass bei Axialkraftaufbau zur Erzeugung der Abdichtung das Filterelement 1 stets in Bezug auf die Achse des Filtergehäuses zentriert bleibt. Einer der Ausrichte- oder Zentriernocken kann zum Beispiel geteilt ausgebildet werden und mit einer im Gehäuse angespritzten Rippe zusammen wirken. Durch das Ausbilden einer geteilt ausgebildeten Nocke am Umfang des Hauptfilterelementes ist dessen lagerichtiges Einfügen in den Schacht des Filtergehäuses gewährleistet.

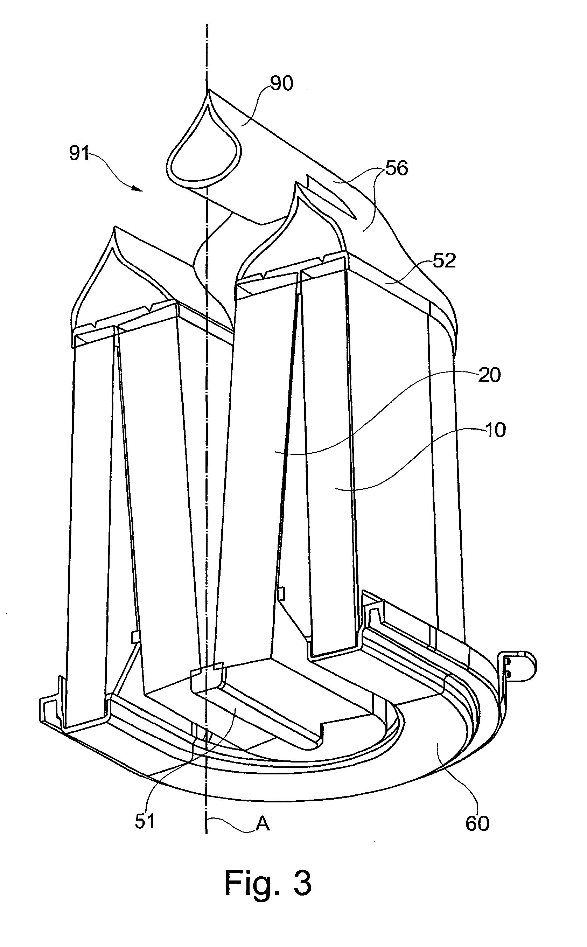

Figur 3 zeigt eine weitere beispielhafte Ausführungsform der Erfindung, bei der eine Leitflächenanordnung mit einer integrierten Griffanordnung 56, 90, 91 auf der axial gegenüberliegenden Seiten des Filterelementes angeordnet ist. Dabei kann die Leitflächenanordnung 56 auf die zweite Dichtungsanordnung 52 aufgesetzt sein oder integral mit ihr geformt sein. Ebenso kann die Leitflächenanordnung 56 aus einem harten Material gefertigt sein, das auf die Dichtungsanordnung 52 aufgesetzt wird. Die Leitflächenanordnung kann dabei sowohl massiv als auch als Hohlkammermaterial ausgeführt sein. In der in Figur 3 gezeigten Anordnung wird der Griff 90 von der in axiale Richtung A erfolgenden Anströmung umströmt, so dass ein Teil des anströmenden Fluids den Griff 90 hinterströmt, um somit in den zentralen Anströmkanal zu gelangen, der durch die innere Mantelfläche des zweiten Faltenbalges 20 gebildet wird. Ein anderer Teil des angeströmten Fluids gelangt, durch die Leitflächenanordnung 56 geleitet, an die äußere Mantelfläche des ersten Faltenbalgelementes 10 und durchströmt dieses radial nach innen. Durch die Leitflächenanordnung kann im Wesentlichen erreicht werden, dass das anströmende Fluid im Wesentlichen turbulenzfrei bzw. turbulenzarm in die entsprechenden Anströmkanäle bzw. auf die entsprechenden Anströmflächen des ersten Faltenbalges 10 bzw. des zweiten Faltenbalges 20 gelangt.

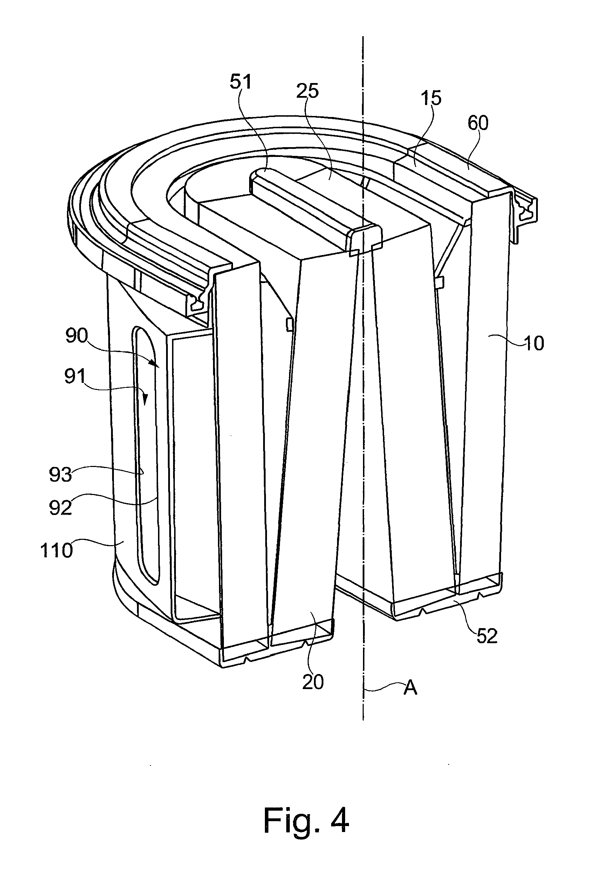

Figur 4 zeigt eine weitere beispielhafte Ausführungsform der Erfindung, bei der die Leitflächenanordnung 110 in radialer Richtung neben der Filterfaltenbalganordnung 10 angeordnet ist. Dabei ist diese Leitflächenanordnung für eine tangentiale Anströmung des Filterelementes 1 vorgesehen. Es sei an dieser Stelle verstanden, dass diese seitlich angeordnete Leitflächenanordnung 110 auch kombiniert eingesetzt werden kann mit der auf die Dichtungselemente aufgesetzten Leitflächenanordnungen 56. Ebenso sei verstanden, dass die auf der ersten Dichtungsanordnung aufgesetzte Leitflächenanordnung kombiniert werden kann mit der auf die zweite Dichtungsanordnung 52 aufgesetzten Leitflächenanordnung.

Die in Figur 4 gezeigte Leitflächenanordnung weist ebenfalls einen Griff auf, mit dem das Filterelement 1 beispielsweise seitlich, das heißt quer zur axialen Durchströmungsrichtung aus einem Luftfiltergehäuse entnommen werden kann. Dabei sind an der Leitflächenanordnung 110 ebenfalls eine vordere und eine hintere Kante 92, 93 vorgesehen, die so angeordnet sein können, dass sie eine Fluidströmung turbulenzfrei bzw. turbulenzarm an die äußere Mantelfläche des Faltenbalgelementes 10 heranführen. Die Bedeutung der verbleibenden in Figur 4 gezeigten Elemente, insbesondere der formwahrenden Schale 60, der ersten Dichtungsanordnung 51 und der zweiten Dichtungsanordnung 52 wurden bereits mit Bezugnahme auf die Figuren 1, 2 und 3 beschrieben.

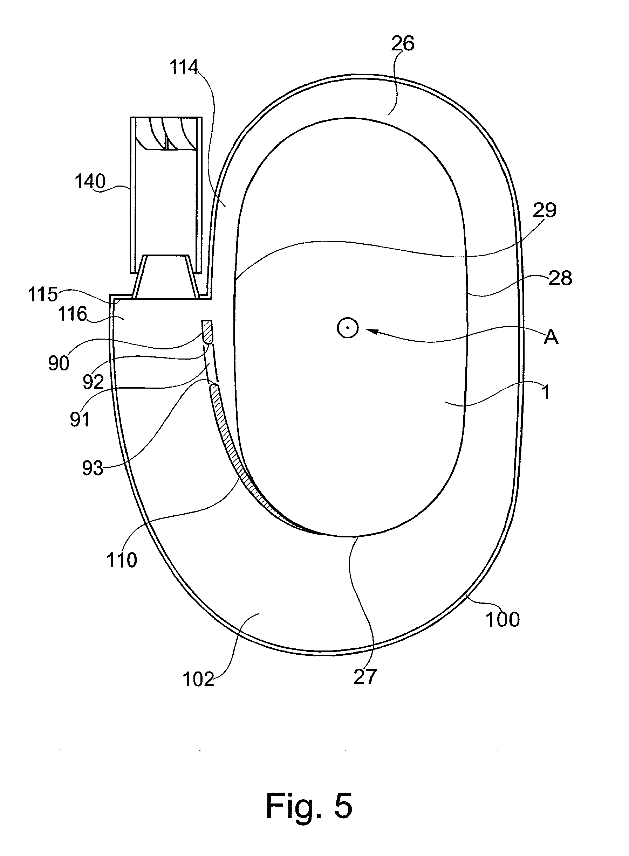

Figur 5 zeigt die in Figur 4 gezeigte Filterelementanordnung eingesetzt in ein Luftfiltergehäuse 100. Die in Figur 5 gezeigte Ansicht ist eine Schnittansicht quer zur axialen Durchströmungsrichtung. Dabei wird in der in Figur 5 gezeigten Anordnung das zu filternde Fluid tangential in das Luftfiltergehäuse 100 eingeführt. Dies kann beispielsweise über einen vorgeschalteten Zyk-Ion 140 erfolgen, der als grober Vorabscheider größere Staub- und Schmutzpartikel abfiltert. Ein derartiger Zyklonvorabscheider ist jedoch nicht zwingend notwendig, da die tangentiale Anströmung auch durch die Fliehkraft gröbere Staubpartikel nach außen an die Wandung des Luftfiltergehäuses drückt, die über entsprechende hier nicht gezeigte Auslassöffnungen abgeführt werden können. Das Filterelement 1 weist durch seine ovale Ausgestaltung gegenüberliegende Bereiche 28, 29 auf, die eine geringere Krümmung aufweisen sowie Bereiche 26 und 27, die eine größere Krümmung aufweisen. Das Luftfiltergehäuse weist einen Bereich 114 mit einem geringen Abstand des Filterelementes 1 zu dem Luftfiltergehäuse 100 auf sowie einen Bereich 116 mit einem großen Abstand des Filterelementes zu dem Luftfiltergehäuse 100. Diese beiden Bereiche 114 und 116 sind über eine Stufe 115 verbunden, in der sich eine Einlassöffnung für das zu filternde Fluid befindet. Das über eine Einlassöffnung, beispielsweise jedoch nicht zwingend über einen vorgeschalteten Zyklon 140 einströmende Fluid gelangt in den Rohgasraum 102 des Luftfilters und wird um das Filterelement 1 tangential herumgeleitet. Dabei kann sich der Abstand zwischen dem Filterelement 1 und dem Luftfiltergehäuse 100 allmählich entlang des Umfangs in Anströmungsrichtung verjüngen, so dass der Strömungsquerschnitt entlang des Umfangs allmählich abnimmt in dem Maße, wie das zu filternde Fluid radial nach innen durch das Filtermedium des Filterelementes 1 hindurchtritt. Auf diese Weise wird der Druck auf das Filtermedium im Wesentlichen entlang des Umfanges konstant gehalten und die Flächenbelastung des Filterelementes 1 gleichmäßig ausgestaltet. Die Leitflächenanordnung 110 kann dabei zum einen dazu dienen, die durch die Öffnung in der Stufe 115 einströmende Luft bzw. das Fluid auf eine zyklische Bahn um das Filterelement 1 herumzuleiten bzw. um Turbulenzen im Eingangsbereich zu unterbinden. Ferner kann die Leitflächenanordnung 110 auf der Rückseite eine entsprechende An- bzw. Einströmung am Ende des entlang des Umfangs des Filterelementes 1 verlaufenden Einströmkanals bilden, so dass auch im hinteren Bereich des Einströmkanals zwischen der Leitflächenanordnung 110 und dem eigentlichen Filterelement 1 ein entsprechender Druck des einströmenden Fluids aufrechterhalten wird, der zu einem Durchtritt des zu filternden Fluids durch das Filtermedium führt.

Der in der Leitflächenanordnung 110 vorgesehene Durchgriff 91 stellt dabei einen Griff dar, durch den ein Bedienpersonal das Filterelement 1 dem Luftfiltergehäuse entnehmen kann, insbesondere wenn das Luftfiltergehäuse eine hier nicht gezeigte Öffnung aufweist, die eine Entnahme des Filterelementes 1 quer zur Erstreckungsrichtung erlaubt, die hier senkrecht zur Bildebene steht.

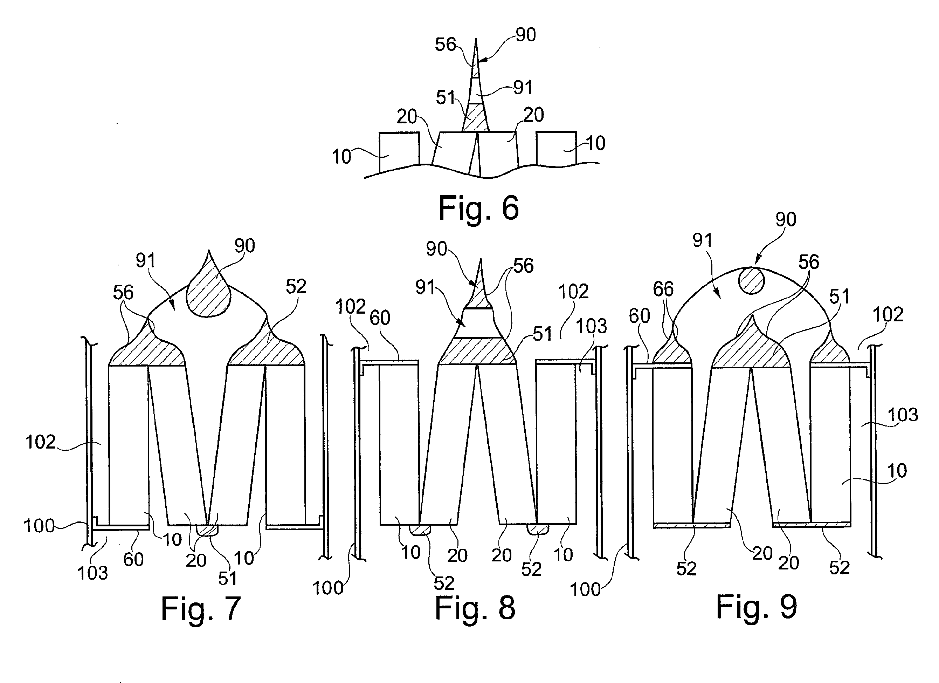

Figuren 6 bis 9 zeigen beispielhafte Ausführungsformen von Leitflächenanordnungen mit integrierten Griffgeometrien.

Figur 6 zeigt eine Leitflächenanordnung 56, die auf eine erste Dichtungsanordnung 51 aufgesetzt oder angeformt ist, wobei sich die erste Dichtungsanordnung 51 nur teilweise über die Faltentiefe eines zweiten Faltenbalges 20 erstreckt. Dadurch kann die Leitflächenanordnung verhältnismäßig schmal ausgestaltet werden und der Griff weist nur eine verhältnismäßig kleine Breite auf.

Figur 7 zeigt hingegen eine Anformung einer Leitflächenanordnung 56 an eine zweite Dichtungsanordnung 52, die der ersten Dichtungsanordnung 51 in axialer Erstreckungsrichtung gegenüberliegt. Dabei kann der Griff 90 so ausgestaltet sein, dass dieser von einem anströmenden Fluid umströmt wird, so dass ein Teil des anströmenden Fluids durch den Eingriff 91 auf den Strömungskanal trifft, der durch die Innenmantelfläche des zweiten Filterbalges gebildet wird. Ein weiterer Teil des anströmenden Fluids kann durch die Leitflächenanordnung in den Rohgasraumbereich 102 zwischen der äußeren Mantelfläche des Filterfaltenbalges 10 und dem Luftfiltergehäuse 100 gelangen und dieses radial nach innen durchströmen. Das von dem Rohgasraumbereich 102 von einem Bereich zwischen dem Luftfiltergehäuse 100 und der äußeren Mantelfläche des ersten Faltenbalges 10 radial nach innen strömende Fluid und das von einer inneren Mantelfläche des zweiten Filterfaltenbalges radial nach außen strömende Fluid treffen sich in einem Abströmkanal, der durch die innere Mantelfläche des ersten Filterfaltenbalges und die äußere Mantelfläche des zweiten Filterfaltenbalges gebildet wird. Eine Abdichtung kann dabei beispielsweise über die formwahrende Schale 60 gegenüber dem Luftfiltergehäuse erfolgen.

Figur 8 zeigt eine beispielhafte Ausführungsform der Erfindung, bei der die Leitflächenanordnung 56 an dem ersten Dichtungselement 51 angeformt ist oder aufgesetzt ist. Im Wesentlichen entspricht diese Geometrie der mit Bezugnahme auf Figur 6 beschriebenen Geometrie, jedoch erstreckt sich das erste Dichtungselement 51 in der in Figur 8 gezeigten Ausführungsform über die gesamte Breite des zweiten Filterfaltenbalges. Eine Abdichtung gegenüber dem Luftfiltergehäuse erfolgt hier ebenfalls über die formwahrende Schale 60.

Figur 9 zeigt eine weitere beispielhafte Ausführungsform, bei der sich eine Leitflächenanordnung 56, 66 sowohl auf der formwahrenden Schale 60 als auch auf der ersten Dichtungsanordnung 51 befindet. Dabei erfolgt ebenfalls eine Umströmung des Griffes 91, so dass das anströmende Fluid durch den Durchgriff 91 auf den Anströmkanal geleitet wird, der durch die innere Mantelfläche des ersten Filterbalges 10 und der äußeren Mantelfläche des zweiten Filterbalges 20 gebildet wird.

In den Figuren 6 bis 9 erfolgt die Anströmung über den Rohgasraum, hier jeweils von oben, während die Abströmung über den Reingasraum, hier jeweils nach unten, erfolgt. Die in Figur 7 gezeigte Anordnung entspricht im Wesentlichen der mit Bezugnahme auf Figur 3 beschriebenen Ausführungsform. Die in Figur 8 schematisch gezeigte Ausführungsform entspricht im Wesentlichen der mit Bezugnahme auf Figur 2 gezeigten Ausführungsform.

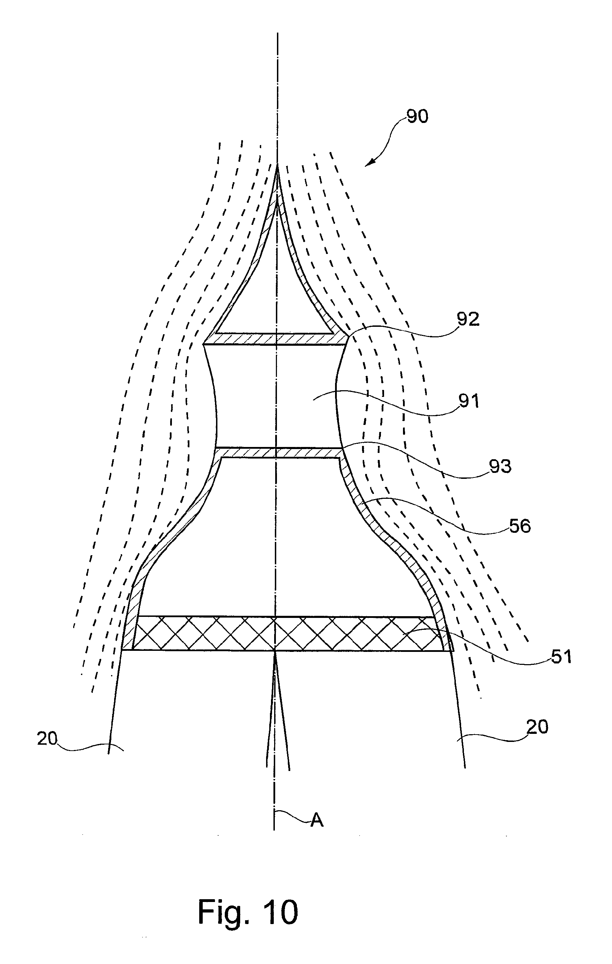

Figur 10 zeigt eine weitere beispielhafte Ausgestaltung einer Leitflächenanordnung 56, die auf eine erste Dichtungskonfiguration 51 aufgesetzt ist. In der in Figur 10 gezeigten Ausführungsform sind Strömungsverlaufslinien eingezeichnet, die symbolisieren, wie ein anströmendes Fluid über eine in stromaufwärtige Richtung begrenzende Kante 52 hinweggeleitet wird und im Wesentlichen turbulenzfrei bzw. turbulenzarm über eine den Durchgriff 91 in stromabwärtige Richtung begrenzende Kante 93 hinweggeleitet wird. Dabei sei angemerkt, dass die Kante 92 nicht zwingend über die Kante 93 hinausragen muss, sondern eine geometrische Ausgestaltung so gewählt wird bzw. werden kann, dass eine Strömungsleitung über die Kante 93 hinweg erfolgt.

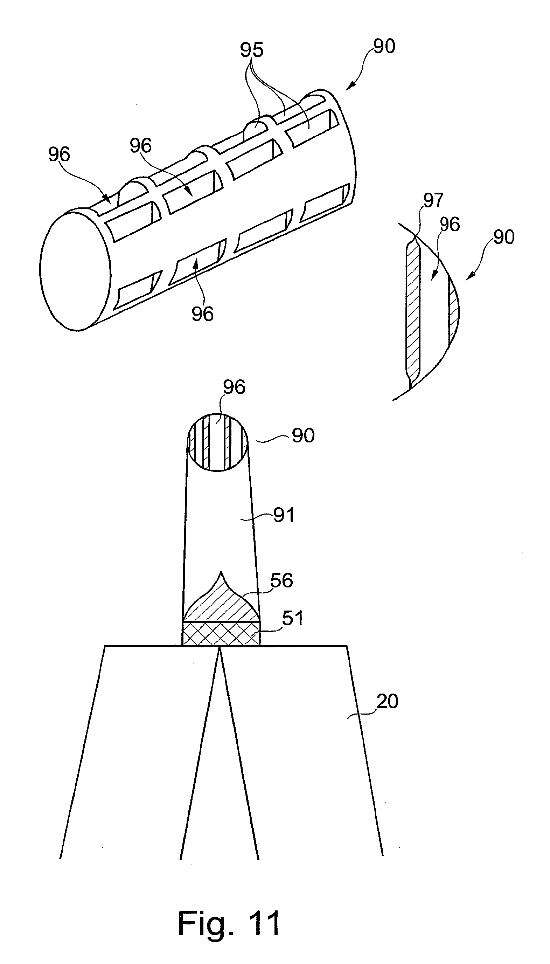

Figur 11 zeigt eine weitere Ausführungsform der Erfindung, bei der ein Griff 90 mit kanalförmigen Ausnehmungen 96 versehen ist, die sich in Strömungsrichtung erstrecken. Diese kanalförmigen Ausnehmungen erlauben einem anströmenden Fluid, dass es im Wesentlichen durch den Griff hindurch strömen kann, ohne an dem Griff außen vorbeigeleitet werden zu müssen. Diese Gitterstruktur 95 führt im Wesentlichen zu einer mechanisch stabilen Griffkonstruktion, verringert jedoch den eigentlichen Strömungswiderstand des Griffes dadurch, dass das anströmende Fluid durch den Griff im Wesentlichen durchströmen kann.

Die in Figur 11 gezeigte Schnittansicht zeigt ferner, dass die Begrenzungskanten der kanalförmigen Ausnehmungen 96 eine strömungsoptimierte Kantengeometrie 97 aufweisen können, so dass eine Einströmung des anströmenden Fluides in die kanalförmigen Ausnehmungen 96 strömungsoptimiert verlaufen kann.

Ferner zeigt Figur 11 eine schematische Anordnung, wie ein derartiger Griff 90 bezüglich eines Durchgriffes 91 bzw. einer Leitflächenanordnung 56 angeordnet werden kann, so dass die kanalförmigen Ausnehmungen 96 auf die Leitflächenanordnung 56 gerichtet sind, um erst im Bereich der unter dem Griff liegenden Leitflächenanordnung eine Aufteilung des anströmenden Fluides vornehmen zu können.

Es sei angemerkt, dass der Begriff " umfassend" weitere Elemente nicht ausschließt, ebenso wie die Begriffe " ein" und " eine" mehrere Elemente und Schritte nicht ausschließen.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

## Patentansprüche

1. Filterelement mit
einer Filterfaltenbalganordnung (10, 20) mit einem ersten Filterfaltenbalg (10) mit einer im Wesentlichen axialen Ausdehnungsrichtung (A) und einer im Wesentlichen in einer dazu orthogonal verlaufenden Ebene radialen Ausdehnungsrichtung,
einem Griff (90), und
einer Leitflächenanordnung (56, 66, 110),
wobei die Filterfaltenbalganordnung wenigstens eine Begrenzungsfläche eines Anströmkanals bildet, über den das Filterelement (1) angeströmt wird,
wobei die Leitflächenanordnung ausgelegt ist, um eine Fluidströmung gerichtet an die Filterfaltenbalganordnung heranzuführen,
wobei der Griff in die Leitflächenanordnung integriert ist, derart, dass die Leitflächenanordnung (56, 66, 110) in einer Richtung quer zur axialen Ausdehnungsrichtung (A) einen Durchgriff (91) aufweist.

2. Filterelement gemäß Anspruch 1, wobei die Filterfaltenbalganordnung (10, 20) einen ersten Filterfaltenbalg (10) mit im Wesentlichen in einer axialen Ausdehnungsrichtung (A) des Filterelementes verlaufenden Filterfalten (15) und einen zweiten Filterfaltenbalg (20) mit im Wesentlichen in einer axialen Ausdehnungsrichtung (A) des Filterelementes verlaufenden Filterfatten (25) aufweist, wobei der zweite Filterfaltenbalg (20) radial innen zu dem ersten Filterfaltenbalg (10) angeordnet ist.

3. Filterelement gemäß einem der Ansprüche 1 und 2, wobei die Filterfalten (25) des zweiten Filterfaltenbalgs (20) gegenüber den Filterfalten (15) des ersten Filterfaltenbalgs(10) einer axialen Ausdehnungsrichtung (A) wenigstens abschnittsweise geneigt sind.

4. Filterelement gemäß einem der Ansprüche 1 bis 3, wobei ein innerer Filterfaltenbalg (20) in einer Ebene der radialen Ausdehnungsrichtung einen ersten gebogenen Abschnitt (26) und einen zweiten gebogenen Abschnitt (27) aufweist mit einem jeweils dazwischenliegenden ersten im wesentlichen geraden Abschnitt (28) und einem zweiten im wesentlichen geraden Abschnitt (29).

5. Filterelement gemäß Anspruch 4, wobei an einem ersten axialen Ende (21) des zweiten Filterfaltenbalges (20) der erste gerade Abschnitt (28) mit dem zweiten geraden Abschnitt (29) derart mit einem ersten Dichtungselement (51) miteinander verbunden ist, dass eine Reingasseite und eine Rohgasseite des zweiten Filterfaltenbalges (20) fehlluftdicht voneinander getrennt sind.

6. Filterelement gemäß Anspruch 5, wobei an dem ersten Dichtungselement (51) eine sich in die axiale Ausdehnungsrichtung (A) erstreckende Leitflächenanordnung angeordnet ist, die ausgelegt ist, um eine auf das erste Dichtungselement anströmende Fluidströmung seitlich abzulenken.

7. Filterelement gemäß Anspruch 6, wobei eine den Durchgriff (91) in stromaufwärtige Richtung begrenzende Kante (92) derart ausgestaltet ist, dass eine Fluidstömung im Wesentlichen über eine den Durchgriff in stromabwärtige Richtung begrenzende Kante (93) hinwegleitbar ist.

8. Filterelement gemäß einem der Ansprüche 5 bis 7, wobei sich das erste Dichtungselement (51) in einer Ebene der radialen Ausdehnungsrichtung nur teilweise über eine Tiefe der zweiten Filterfalten (25) des zweiten Filterfaltenbalges (20) erstreckt.

9. Filterelement gemäß einem der Ansprüche 2 bis 8, wobei der erste Filterfaltenbalg (10) und der zweite Filterfaltenbalg (20) an jeweils einem zweiten axialen Ende (12, 22) derart mit einem zweiten Dichtungselement (52) miteinander verbunden sind, dass jeweils die Reingasseiten und die Rohgasseiten des ersten Filterfaltenbalges (10) bzw. des zweiten Filterfaltenbalges (20) fehlluftdicht voneinander getrennt sind.

10. Filterelement gemäß einem der Ansprüche 1 bis 9, wobei der erste Filterfaltenbalg (10) an einem ersten axialen Ende (11) mit einer bezüglich einer Außenkante (13) des ersten Filterfaltenbalges (10) formwahrenden Schale (60) versehen ist.

11. Filterelement gemäß Anspruch 10, wobei die Leitflächenanordnung (56, 66, 110) an der formwahrenden Schale angeordnet ist und sich in die axiale Ausdehnungsrichtung (A) erstreckt, wobei der Griff (90) an der formwahrenden Schale (60) angeordnet ist.

12. Filterelement gemäß einem der Ansprüche 1 bis 11, wobei die Leitflächenanordnung (56, 66, 110) einen Durchgriff (91) mit einer Verbindung zu einem aus der Faltenfilteranordnung (10, 20) gebildeten Anströmungskanal aufweist.

13. Filterelement gemäß einem der Ansprüche 1 bis 12, wobei die Leitflächenanordnung (56, 66, 110) in radialer Richtung neben der Filterfaltenbalganordung (10, 20) angeordnet ist und sich im Wesentlichen in Richtung der axialen Ausdehnungsrichtung (A) erstreckt.

14. Filterelement gemäß Anspruch 13, wobei die Leitflächenanordnung (56, 66, 110) von der Mantelfläche der Filterfaltenanordnung (10, 20) beabstandet ist.

15. Filterelement gemäß einem der Ansprüche 13 und 14, wobei die Leitflächenanordnung (56, 66, 110) einen Ausnehmung (91) zum Hintergreifen aufweist.

16. Filterelement gemäß einem der Ansprüche 1 bis 15, wobei der Griff (90) eine Gitterstruktur (95) aufweist, wobei die Gitterstruktur kanalförmige Ausnehmungen (96) aufweist, die sich im Wesentlichen in eine Fluidströmungsrichtung erstrecken.

17. Filterelement gemäß Anspruch 16, wobei die kanalförmigen Ausnehmungen (96) Einlasskanten (97) aufweisen, die in Bezug auf einen Kanaleinlass eine strömungsoptimierte Geometrie aufweisen.

## Claims

1. Filter element having
a filter bellows arrangement (10, 20) with a first filter bellows (10) having a substantially axial extension direction (A) and a substantially orthogonal extending plane in radial direction thereto,
a handle (90), and
a guiding surface arrangement (56, 66, 110),
wherein the filter bellows arrangement forms at least one boundary surface of an inflow channel via which the flow is directed towards the filter element (1),wherein the guiding surface arrangement is designed to guide a fluid flow towards the filter bellows arrangement,
wherein the handle is integrated in the guiding surface arrangement in such a way that the guiding surface arrangement (56, 66, 110) features an opening (91) in a direction extending transversely in relation to the axial extension direction (A).

2. Filter element according to claim 1, wherein the filter bellows arrangement (10, 20) features a first filter bellows (10) with filter folds (15) extending substantially in an axial extension direction (A) of the filter element and a second filter bellows (20) with filter folds (25) extending substantially in an axial extension direction (A) of the filter element, wherein the second filter bellows (20) is disposed radially inside in relation to the first filter bellows (10).

3. Filter element according to one of the claims 1 and 2, wherein the filter folds (25) of the second filter bellows (20) are inclined at least sectionwise in relation to the filter folds (15) of the first filter bellows (10) of an axial extension direction (A).

4. Filter element according to one of the claims 1 to 3, wherein an inner filter bellows (20) features in a plane of the radial extension direction a first bent section (26) and a second bent section (27) with a first substantially straight section (28) and a second substantially straight section (29) each disposed therebetween.

5. Filter element according to claim 4, wherein the first straight section (28) is connected, at a first axial end (21) of the second filter bellows (20), with the second straight section (29) by means of a first sealing element (51) in such a way that a clean gas side and a raw gas side of the second filter bellows (20) are separated from each other in an infiltrated-air-tight manner.

6. Filter element according to claim 5, wherein a guiding surface arrangement extending in the axial extension direction (A) is disposed at the first sealing element (51), which is designed to laterally deflect a fluid flow flowing towards the first sealing element.

7. Filter element according to claim 6, wherein an edge (92) defining the opening (91) in upstream direction is designed in such a way that a fluid flow can be guided substantially over an edge (93) defining the opening in downstream direction.

8. Filter element according to one of the claims 5 to 7, wherein the first sealing element (51) extends in a plane of the radial extension direction only partially over a depth of the second filter folds (25) of the second filter bellows (20).

9. Filter element according to one of the claims 2 to 8, wherein the first filter bellows (10) and the second filter bellows (20) are connected with a second sealing element (52) at a second axial end (12, 22) each in such a way that the clean gas sides and the raw gas sides each of the first filter bellows (10) and the second filter bellows (20), respectively, are separated from each other in an infiltrated-air-tight manner.

10. Filter element according to one of the claims 1 to 9, wherein the first filter bellows (10) is provided at a first axial end (11) with a shape-retaining shell (60) with respect to an outer edge (13) of the first filter bellows (10).

11. Filter element according to claim 10, wherein the guiding surface arrangement (56, 66, 110) is disposed at the shape-retaining shell and extends in the axial extension direction (A), wherein the handle (90) is disposed at the shape-retaining shell (60).

12. Filter element according to one of the claims 1 to 11, wherein the guiding surface arrangement (56, 66, 110) features an opening (91) with a connection to an inflow channel formed by the filter bellows arrangement (10, 20).

13. Filter element according to one of the claims 1 to 12, wherein the guiding surface arrangement (56, 66, 110) is disposed in radial direction adjacent to the filter bellows arrangement (10, 20) and extends substantially in the direction of the axial extension direction (A).

14. Filter element according to claim 13, wherein the guiding surface arrangement (56, 66, 110) is spaced away from the girth area of the filter bellows arrangement (10, 20).

15. Filter element according to one of the claims 13 and 14, wherein the guiding surface arrangement (56, 66, 110) features an opening (91) for engaging behind.

16. Filter element according to one of the claims 1 to 15, wherein the handle (90) features a grid-like structure (95), wherein the grid-like structure features channel-shaped openings (96) which extend substantially in a fluid flow direction.

17. Filter element according to claim 16, wherein the channel-shaped openings (96) feature inlet edges (97) which feature with respect to a channel inlet a flow-optimized geometry.

## Revendications

1. Élément filtrant avec
un ensemble de soufflets de filtre (10, 20) comprenant un premier soufflet de filtre (10) avec une direction d'extension (A) essentiellement axiale et une direction d'extension radiale évoluant essentiellement sur un plan orthogonal à cette direction d'extension axiale,
une poignée (90), et
un ensemble de surfaces de guidage (56, 66, 110),
l'ensemble de soufflets de filtre formant au moins une surface de limitation d'un canal d'afflux par l'intermédiaire de laquelle l'élément filtrant (1) est parcouru par le flux,
l'ensemble de surfaces de guidage étant conçu pour acheminer un flux de fluide en direction de l'ensemble de soufflets de filtre,
la poignée étant intégrée à l'ensemble de surfaces de guidage, de sorte que l'ensemble de surfaces de guidage (56, 66, 110) présente un passage (91) dans une direction transversale par rapport à la direction d'extension (A) axiale.

2. Élément filtrant selon la revendication 1, l'ensemble de soufflets de filtre (10, 20) présentant un premier soufflet de filtre (10) avec des plis de filtre (15) évoluant essentiellement dans une direction d'extension (A) axiale de l'élément filtrant, et un deuxième soufflet de filtre (20) avec des plis de filtre (25) évoluant essentiellement dans une direction d'extension (A) axiale de l'élément filtrant, le deuxième soufflet de filtre (20) étant disposé de manière radiale, à l'intérieur, par rapport au premier soufflet de filtre (10).

3. Élément filtrant selon l'une des revendications 1 et 2, les plis de filtre (25) du deuxième soufflet de filtre (20) étant inclinés, au moins sur certaines sections, par rapport aux plis de filtre (15) du premier soufflet de filtre (10) dans une direction d'extension (A) axiale.

4. Élément filtrant selon l'une des revendications 1 à 3, un soufflet de filtre interne (20) présentant dans un plan de la direction d'extension radiale une première section courbe (26) et une deuxième section courbe (27) avec, respectivement entre les deux, une première section (28) essentiellement droite et une deuxième section (29) essentiellement droite.

5. Élément filtrant selon la revendication 4, la première section droite (28) étant reliée, à la première extrémité axiale (21) du deuxième soufflet de filtre (20), à la deuxième section droite (29) au moyen d'un premier élément d'étanchéité (51) de sorte qu'un côté de gaz pur et un côté de gaz brut du deuxième soufflet de filtre (20) soient séparés l'un de l'autre de manière étanche aux fuites d'air.

6. Élément filtrant selon la revendication 5, un ensemble de surfaces de guidage évoluant dans la direction d'extension (A) axiale étant disposé sur le premier élément d'étanchéité (51), cet ensemble étant conçu pour dévier en sens latéral un flux de fluide affluant sur le premier élément d'étanchéité.

7. Élément filtrant selon la revendication 6, un bord (92) limitant le passage (91) dans une direction en amont étant exécuté de façon à ce qu'un flux de fluide puisse être guidé essentiellement au-delà d'un bord (93) limitant le passage dans la direction en aval.

8. Élément filtrant selon l'une des revendications 5 à 7, le premier élément d'étanchéité (51) ne s'étendant dans un plan de la direction d'extension radiale que partiellement au-dessus d'un creux des deuxièmes plis de filtre (25) du deuxième soufflet de filtre (20).

9. Élément filtrant selon l'une des revendications 2 à 8, le premier soufflet de filtre (10) et le deuxième soufflet de filtre (20) étant reliés l'un à l'autre, au niveau respectivement d'une deuxième extrémité axiale (12, 22), avec un deuxième élément d'étanchéité (52) de sorte que respectivement les côtés de gaz pur et les côtés de gaz brut du premier soufflet de filtre (10) et/ou du deuxième soufflet de filtre (20) soient séparés l'un de l'autre de manière étanche aux fuites d'air.

10. Élément filtrant selon l'une des revendications 1 à 9, le premier soufflet de filtre (10) étant pourvu, au niveau d'une première extrémité axiale (11), d'une coque (60) à la forme stable par rapport à un bord extérieur (13) du premier soufflet de filtre (10).

11. Élément filtrant selon la revendication 10, l'ensemble de surfaces de guidage (56, 66, 110) étant disposé sur la coque à la forme stable et s'étendant dans la direction d'extension axiale (A), la poignée (90) étant disposée sur la coque à la forme stable (60).

12. Élément filtrant selon l'une des revendications 1 à 11, l'ensemble de surfaces de guidage (56, 66, 110) présentant un passage (91) avec une liaison à un canal d'afflux formé par l'ensemble de soufflets de filtre (10, 20).

13. Élément filtrant selon l'une des revendications 1 à 12, l'ensemble de surfaces de guidage (56, 66, 110) étant disposé en direction radiale à côté de l'ensemble de soufflets de filtre (10, 20) et s'étendant essentiellement en direction d'extension (A) axiale.

14. Élément filtrant selon la revendication 13, l'ensemble de surfaces de guidage (56, 66, 110) étant espacé de la surface d'enveloppe de l'ensemble de soufflets de filtre (10, 20).

15. Élément filtrant selon l'une des revendications 13 et 14, l'ensemble de surfaces de guidage (56, 66, 110) présentant un évidement (91) autorisant une prise par l'arrière.

16. Élément filtrant selon l'une des revendications 1 à 15, la poignée (90) présentant une structure réticulaire (95), la structure réticulaire étant dotée d'évidements (96) en forme de canaux qui s'étendent essentiellement dans la direction du flux de fluide.

17. Élément filtrant selon la revendication 16, les évidements (96) en forme de canaux présentant des bords d'admission (97) ayant une géométrie optimisée pour le flux au niveau de l'entrée des canaux.
